# Europäisches Patentamt

## European Patent Office

## Office européen des brevets

(19)

(11) Veröffentlichungsnummer: **0 098 510**
**B1**

(12) **EUROPÄISCHE PATENTSCHRIFT**

(45) Veröffentlichungstag der Patentschrift:
**16.09.87**

(51) Int. Cl.⁴: **B 03 D 1/00, C 22 B 60/04**

(21) Anmeldenummer: **83106302.9**

(22) Anmeldetag: **28.06.83**

(54) **Verfahren zur selektiven Trennung des Plutoniums von Uran und anderen Metallen.**

(30) Priorität: **02.07.82 DE 3224803**

(43) Veröffentlichungstag der Anmeldung:
**18.01.84 Patentblatt 84/3**

(45) Bekanntmachung des Hinweises auf die Patenterteilung:
**16.09.87 Patentblatt 87/38**

(84) Benannte Vertragsstaaten:
**BE DE FR GB**

(56) Entgegenhaltungen:
**EP - A - 0 004 953**
**DE - B - 1 166 113**
**FR - A - 1 404 876**

(73) Patentinhaber: **Kernforschungszentrum Karlsruhe GmbH, Weberstrasse 5 Postfach 3640, D-7500 Karlsruhe 1 (DE)**

(72) Erfinder: **Heckmann, Klaus, Prof. Dr., Zum Aichahof 20, D-8400 Regensburg (DE)**
Erfinder: **Spurny, Jiri, Dr., Alfons Auer Strasse 16b, D-8400 Regensburg (DE)**

EP 0 098 510 B1

**Beschreibung**

Die Erfindung betrifft ein Verfahren zur selektiven Trennung von Plutonium und Uran.

Die gemeinsame Abtrennung von Plutonium und Uran von anderen Elementen und die Abtrennung des Plutoniums vom Uran erfolgt heutzutage fast ausschliesslich aus wässrigen Lösungen. Hier haben sich zwei Verfahren durchgesetzt, deren jedes in mehreren Varianten angewendet wird: das Flüssig-Extraktionsverfahren und das Ionenaustauschverfahren. Beide Verfahren lassen sich zwar grundsätzlich handhaben – auch in grosstechnischem Massstab – weisen aber noch unerwünschte Nachteile auf:

– Relativ lange Verweilzeiten von organischen Lösungsmitteln, Komplexbildnern oder Harzen in Gebieten höherer Strahlungsdichte führen zu radiolytischer Zerstörung und damit zu Kapazitätsverlusten und zu störenden Gasentwicklungen.

– Bei den Flüssig-Extraktionsverfahren bereiten sowohl der Durchtritt von $UO_2^{2+}$ und $Pu^{4+}$ durch die Phasengrenze zwischen Wasser und organischem Solvens, als auch die Anreicherung von Niederschlägen an dieser Phasengrenze kinetische Probleme.

– Bei Anwendung der Mixer/Settler-Technik im Zuge der Flüssigextraktion wird die stationäre Prozessführung durch Dichteschwankungen in der organischen und der wässrigen Phase während suzessiver Extraktions- und Reextraktionsschritte erschwert.

– Die Reaktion von Ionenaustauscherharzen und Komplexbildnern (z.B. Tributylphosphat) mit konzentrierter $HNO_3$ bedeutet ein unnötiges Gefahrenpotential.

– Die Trennschärfe der Flüssigextraktionsverfahren und der Ionenaustauschverfahren bei der Separierung des Urans vom Plutonium und bei der Separierung beider Elemente von anderen Elementen ist so niedrig, dass die Separierung in mehreren hintereinander geschalteten Stufen erfolgen muss.

Diese Schwierigkeiten treten bereits in relativ gut definierten Lösungen auf, wie sie z.B. beim Auflösen von Kernbrennelementen in konzentrierter $HNO_3$ anfallen. Es kommen zusätzliche Schwierigkeiten in der Prozessführung hinzu, wenn uneinheitliche Lösungen aufgearbeitet werden müssen, die evtl. noch schlecht definiertes organisches Material schwankender Zusammensetzung enthalten. Für solche Abwässer existieren derzeit keine ganz befriedigenden Aufbereitungsverfahren, so dass auch die Rückgewinnung von Kernbrennmaterial aus solchen Abwässern und der Transport und die Lagerung der verbleibenden Rückstände noch nicht zufriedenstellend gelöst sind.

Es besteht darum ein Bedarf an neuen oder verbesserten Verfahren für die Separierung von Uran und Plutonium, welche die o.g. Nachteile nicht oder in gemilderter Form aufweisen. Der Anmelder hat darum geprüft, ob sich Plutonium aus wässrigen Lösungen entweder als Kation oder als komplexes Anion durch entweder anionische oder kationische Tenside als schwerlöslicher Niederschlag ausfällen und auf diese Weise selektiv von Uran oder anderen Elementen abtrennen lässt; er hat auch untersucht, ob die Fällung von Plutonium mit Tensiden zu hydrophoben Niederschlägen führt, die sich mit Hilfe der Ionen- bzw. Präzipitatflotation schnell aus den Mutterlaugen entfernen lassen.

In der DE-AS 1 166 113 wird ein Flotationsverfahren für anorganische Ionen beschrieben, bei dem je nach der Ladung des zu flotierenden Ions ein anionischer oder kationischer Sammler zu der ionenhaltigen Lösung zugegeben wird und bei dem dann das sich bildende, unlösliche Reaktionsprodukt unter Einblasen von Gas aufgeschwämmt und als Schaum ausgetragen wird. Nach diesem Verfahren lässt sich das Uran aus Lösungen von Uranylsulfat abtrennen, wenn auch mit schlechter Ausbeute.

In der DE-C-2 817 029 (oder EP-A-004 953) wird ein Verfahren zur selektiven Trennung des Urans von seinen Begleitmetallen und zu seiner Gewinnung beschrieben, demzufolge man zu einer wässrigen Uranlösung Salzsäure in einer solchen Menge zugibt, dass das $UO_2^{2+}$ anionische Chlorokomplexe bildet, ein kationisches Tensid hinzufügt, den dadurch entstehenden Niederschlag in einer Flotationszelle flotiert und das Uran aus dem ausflotierten Präzipitat gewinnt. Dieses Verfahren gestattet zwar die Urangewinnung in grösserer Ausbeute und mit höherer Anreicherung als das Verfahren gemäss DE-AS 1 166 113, es operiert aber auf der Basis von Salzsäure und kann darum aus Gründen der Korrosion nicht ohne zusätzliche Schutzmassnahmen in grösserem Stil eingesetzt werden.

In der DE-PS 2 902 516 wird das in DE-C-2 817 029 (oder EP-A-004 953) beschriebene Verfahren auch auf schwefelsäurehaltige Lösungen ausgedehnt. Dabei werden Ausbeuten und Anreicherungen von Uran erzielt, die denen wesentlich überlegen sind, wie sie in der DE-AS 1 166 113 genannt werden. Die Flotationsdauer ist länger und die Anreicherung ist geringer als nach dem Verfahren gemäss DE-C-2 817 029 (oder EP-A-004 953); dafür ist jedoch die Korrosionsgefährdung geringer.

Hinweise darauf, wie man Plutonium von Uran mittels Tensidfällung trennen kann, finden sich in den o.g. Literaturstellen nicht.

Der vorliegenden Erfindung liegt somit die Aufgabe zugrunde, ein einfaches Verfahren zur Abtrennung von Plutonium und Uran zur Verfügung zu stellen, das für die Rückgewinnung von Plutonium aus Kernkraftwerkabbränden und anderen radioaktiven Abfällen geeignet ist und die Nachteile der bekannten Verfahren nicht besitzt. Bei dem erfindungsgemässen Verfahren soll die Expositionszeit des organischen Materials in Gebieten hoher Strahlungsdichte verringert und die Menge des verwendeten organischen Materials so gering wie möglich gehalten werden. Das erfindungsgemässe Verfahren soll ausschliesslich in wässrigem Milieu ablaufen, da dadurch die Probleme der Phasendurchtrittskinetik und der Dichteschwankungen in Zwei-Phasen-Systemen vermieden werden.

Der Anmelder hat in Fortführung der Arbeiten zur flotativen Isolierung und Anreicherung von $UO_2^{2+}$ aus homogenen wässrigen Lösungen mit Hilfe von kationischen Tensiden, die in der DE-C-2 817 929 (oder EP-A-004 953) beschrieben sind, die Möglichkeit überprüft, dieses Verfahren zur Isolierung und Anreicherung von $Pu^{4+}$ zu verwenden. Dabei ging er von dem bekannten Befund aus, dass $Pu^{4+}$ und $U^{4+}$ zur Bildung von Nitratokomplexen befähigt sind und darum die wesentlichste Voraussetzung für die Präzipitatflotation mit kationischen Tensiden erfüllen.

Überraschenderweise wurde gefunden, dass zwar $Pu^{4+}$ und $U^{4+}$ als Nitratokomplexe mit kationischen Tensiden, vorzugsweise mit Cetylpyridinium, gefällt werden können, nicht jedoch $UO_2^{2+}$ aus Salpetersäure oder nitrathaltiger Lösung bei $NO_3^-$-Konzentrationen von $< 10$ M. Dies ist umso erstaunlicher, als aus dem Bindungsvermögen von Anionenaustauscherharzen für Uran in salpetersauren Lösungen geschlossen werden muss, dass auch $UO_2^{2+}$ in der Lage ist, Nitratokomplexe zu bilden.

Ausserordentlich überraschend war auch, dass die für die Fällung verwendeten kationischen Tenside, speziell die Alkylpyridiniumsalze, eine sehr hohe Stabilität gegenüber dem Einfluss radioaktiver Strahlung besitzen. So hatten Bestrahlungsdosen bis zu $10^6$ rd keinen nachweisbaren Einfluss auf die Fällungseigenschaften des Cetylpyridinium-Kations. Erst bei $10^8$ rd war ein signifikanter Rückgang des Fällungsvermögens um rund 30% zu verzeichnen.

Erfindungsgemäss wird somit ein einfacher und hochselektiver Prozess zur Trennung von $Pu^{4+}$ und von $UO_2^{2+}$ und zur Rückgewinnung beider Ionen aus wässrigen Lösungen zur Verfügung gestellt. Bei dem erfindungsgemässen Verfahren ist es weder erforderlich, ein organisches Lösungsmittel noch Ionenaustauscherharze zu verwenden. Man verwendet sehr strahlungsstabile Reagenzien, deren Verweilzeit in der Lösung ausserdem vergleichsweise kurz ist. Nach dem erfindungsgemässen Verfahren lässt sich in salpetersauren Lösungen $Pu^{4+}$ von $UO_2^{2+}$ und von allen denjenigen Begleitmetallen praktisch quantitativ abtrennen, die in diesen Lösungen keine oder weniger stabile anionische Nitratokomplexe als $Pu^{4+}$ bilden und bei Zugabe kationischer Tenside nicht ausfallen.

Gegenstand der Erfindung ist somit ein Verfahren zur selektiven Trennung von Plutonium und Uran, das dadurch gekennzeichnet ist, dass man zu einer $Pu^{4+}$ und $UO_2^{2+}$ enthaltenden Lösung Salpetersäure in einer solchen Menge zugibt, dass das $Pu^{4+}$ anionische Nitratokomplexe bildet, ein kationisches Tensid zusammen mit der Salpetersäure oder vor oder nach der Zugabe der Salpetersäure zugibt, den dadurch entstehenden Niederschlag aus seiner Mutterlauge in an sich bekannter Weise abtrennt und das Plutonium aus dem Niederschlag gewinnt.

Es wird $Pu^{4+}$ aus $Pu^{4+}$ und $UO_2^{2+}$ enthaltenden Lösungen in Anwesenheit von Salpetersäure als schwerlöslicher Komplex ausgefällt. $UO_2^{2+}$ bleibt dabei in Lösung; man kann es entweder durch Zugabe von Sulfationen als Sulfatokomplex oder nach Reduktion zu $U^{4+}$ als Nitratokomplex ausfällen.

$Pu^{4+}$ und $U^{4+}$ werden aus einer salpetersauren Lösung gemeinsam ausgefällt. Der Niederschlag wird einem selektiven Oxidationsprozess unterworfen, so dass $U^{4+}$ in $UO_2^{2+}$ überführt wird und in Lösung geht.

In einer salpetersauren Lösung werden $Pu^{4+}$ zu $Pu^{3+}$ und $UO_2^{2+}$ zu $U^{4+}$ reduziert. Sodann wird $U^{4+}$ mit einem kationischen Tensid gefällt. Schliesslich wird $Pu^{3+}$ wieder zu $Pu^{4+}$ oxidiert und dann ebenfalls gefällt.

Bei der vorliegenden Erfindung liegt die untere Grenze der Salpetersäurekonzentration zwischen 0,1 und 1,0 n $HNO_3$. Eine obere Grenze konnte bisher nicht festgestellt werden. Es hat sich herausgestellt, dass auch noch Konzentrationen von 10 n $HNO_3$ verwendet werden können.

$UO_2^{+2}$ bildet bei $HNO_3$-Konzentrationen $< 10$ n einen Komplex $UO_2NO_3^+$. Bei $HNO_3$-Konzentrationen $> 10$ n gibt es zwar anionische Komplexe (durch Adsorption von Uran an Anionenaustauschern festgestellt), die Zusammensetzung dieser Komplexe ist aber unbekannt. $Pu^{4+}$ bildet in $HNO_3$ alle Komplexe von $Pu(NO_3)^{3+}$ bis $Pu(NO_3)_6^{2-}$ (vgl. I.M. Cleveland, «The Chemistry of Plutonium», American Nuclear Society). $Pu^{3+}$ bildet keine anionischen Nitratokomplexe.

Als Tensid verwendet man langkettige Alkylpyridiniumsalze, Alkylamine oder deren Salze, Alkyldimethylnaphthylammoniumsalze, alkylierte Arylamine oder deren Salze, alkyliertes Morpholin oder dessen Salze, oxalkyliertes Pyridin oder dessen Salze, alkyliertes Chinolin oder dessen Salze oder Gemische dieser Verbindungen, wobei es sich bei den langkettigen Alkylresten um gerade oder verzweigte Ketten von 4 bis 24 Kohlenstoffatomen handelt. Besonders vorteilhaft ist es, wenn man als Tensid ein N-Cetylpyridiniumsalz oder ein N-Octadecylpyridiniumsalz verwendet. Das Tensid wird in der 1- bis 10-fachen äquivalenten Menge angewendet.

Das Tensid wird optimal in etwas höheren als den stöchiometrischen Konzentrationen zugegeben (etwa 1,01- bis 1,05-fach). Gibt man wesentlich mehr Tensid hinzu, so bekommt man natürlich mehr Metall in den Niederschlag, es kommt aber zu unnötig intensiver Schaumentwicklung und zur Verlängerung des Flotationsprozesses. Ausserdem verschlechtern sich die Flotationseigenschaften des Niederschlags.

Eine vorteilhafte Ausbildung des erfindungsgemässen Verfahrens besteht darin, dass die Abtrennung der plutoniumhaltigen Niederschläge durch ein FLotationsverfahren erfolgt, dass dabei mehrere Flotationszellen verwendet werden, die in Reihe und/oder parallel geschaltet sind, dass man zum Aufschäumen ein Inertgas (wie Stickstoff) oder Luft verwendet, dass man den abflotierten niederschlaghaltigen Schaum weitgehend entwässert, den Niederschlag in wenig Wasser suspendiert, die Suspension erwärmt, so dass der Niederschlag in Lösung geht, sodann aus der Lösung das $Pu^{4+}$ durch Erhöhung des pH-Wertes als Plutonat ausfällt, den Niederschlag abtrennt und das tensidhaltige Filtrat in den Flotationsprozess rezirkuliert. Die aufzubereitenden Lösungen enthalten neben Uran und Plutonium andere Metallionen, die in diesen Lösungen entweder keine anionischen Komplexe oder aber schwächere anionische Komplexe bilden als $Pu^{4+}$ und die keine schwerlöslichen Niederschläge mit kationischen Tensiden bilden. Ein besonderer Vorteil des Verfahrens besteht darin, dass es kontinuierlich durchgeführt wird.

Will man nicht flotieren, sondern z.B. zentrifugieren oder filtrieren, so kann das Tensid auch in höherer Konzentration (1,01 bis 1,50 Äquivalente) verwendet werden.

U und Pu lassen sich von der Mehrzahl der radioaktiven Spaltprodukte abtrennen, die in einem Reaktor entstehen. Die Abtrennung ist leicht, wenn die anderen Metalle keine anionischen Komplexe bilden und/oder keine anionischen Polysäuren bzw. Heteropolysäuren. Die Abtrennung von anionischen Komplexen und/oder Polysäuren gelingt aber in praktisch allen Fällen ebenfalls, wenn man entweder Ligandkonzentration ($NO_3^-$) oder pH etwas variiert oder U bzw. Pu bzw. die übrigen Metalle selektiv oxidiert bzw. reduziert. So gelingt sogar die Abtrennung des Pu von Ce (das als Simulans für Pu dient und auch ein wesentliches Spaltprodukt darstellt) durch selektive Reduktion des $Ce^{4+}$ zu $Ce^{3+}$. $Ce^{3+}$ bildet mit kationischen Tensiden keine Niederschläge.

Bei Fällung und Abtrennung von Pu und U aus salpetersauren oder nitrathaltigen Lösungen mit geeigneten kationischen Tensiden fallen neben $Pu^{4+}$ nur die Ionen $Ce^{4+}$, $Ru^{2+}$, $Mo^{6+}$, $U^{4+}$, $Th^{4+}$. Je nach Fragestellung können diese Elemente entweder durch Wahl der Fällungsbedingungen oder durch einen nachgeschalteten Prozess von Plutonium abgetrennt oder auch beim Plutonium belassen werden.

Das erfindungsgemässe Verfahren ist grundsätzlich zur Abtrennung von U und Pu aus allen Ausgangsmaterialien geeignet, die U und Pu enthalten. So wurden beide Elemente aus unspezifischen medium-active-waste (MAW)-Abwässern (des Kernforschungszentrums Karlsruhe) entfernt:

Aus Laugen, die in einem zentralen Sammeltank zusammenlaufen und aus verschiedenen Laboratorien stammen. Die Zusammensetzung dieser Abwässer ist im Mittel einigermassen konstant. Mit guter Näherung handelt es sich um eine Lösung von $Na^+$, $Al^{3+}$, $Ca^{2+}$, $Cr^{3+}$, $Cu^{2+}$, $Fe^{3+}$, $Mg^{2+}$, $Mn^{2+}$, $MoO_4^{2-}$, $Ni^{2+}$, $Zn^{2+}$ und $ZrO^{2+}$ in 1 M $HNO_3$, aus der Plutonium und ggf. Uran zu entfernen sind.

Hinsichtlich der anderen Verfahrensbedingungen wird auf die DE-C-2 817 029 (oder EP-A-004 953) verwiesen.

Die folgenden Beispiele erläutern die Erfindung.

Beispiel 1
Selektive Fällung von $Pu^{4+}$ als Nitratokomplex in Gegenwart von $UO_2^{2+}$.

Es wurde eine Lösung von 625 mg $UO_2^{2+}$ und 25 mg $Pu^{4+}$ in 100 ml 7,0 M $HNO_3$ hergestellt. In dieser Lösung wurden sodann 4 g festes Cetylpyridiniumchlorid gelöst. Nach einigen Minuten entstand ein grüner feinkristalliner Niederschlag, der 30 Minuten lang gerührt und dann abfiltriert wurde.

Das Plutonium befand sich zu 98,9% im Niederschlag, das Uran zu 98,9% im Filtrat.

Beispiel 2
Selektive Fällung von $Pu^{4+}$ als Nitratokomplex in Gegenwart von $UO_2^{2+}$ und $Am^{3+}$.

Es wurde eine Lösung von 37,2 μg $Pu^{4+}$, 3,66 mg $UO_2^{2+}$ und einer unbekannten, aber vergleichsweise kleinen Menge $Am^{3+}$ in 100 ml 7,0 M $HNO_3$ hergestellt. Die Lösung wurde mit 120 mg festem Cetylpyridiniumchlorid versetzt, das sich alsbald auflöste. Der etwas später ausfallende grüne Niederschlag wurde 30 Minuten lang gerührt und dann abfiltriert. Das Plutonium befand sich zu 91% im Niederschlag, Uran und Americium waren zu je 97,9% im Filtrat.

Beispiel 3
Fraktionierte Fällung von Plutonium und Uran aus salpetersauren Lösungen.

Es wurde eine Lösung von 625 mg $UO_2^{2+}$ und 25 mg $Pu^{4+}$ in 100 ml 4,3 N $HNO_3$ hergestellt. Zu dieser Lösung wurde sodann eine Lösung von 0,1 g Cetylpyridiniumchlorid in 3 ml einer 4,3 N $HNO_3$ hinzugefügt. Nach einigen Minuten entstand ein grüner, feinkristalliner Niederschlag, der 30 min. lang gerührt und dann abfiltriert wurde. Das Filtrat wurde mit so viel Hydrazin versetzt, dass eine 0,2 molare Hydrazinlösung entstand, und dann in eine spezielle Elektrolysezelle überführt. Das Uran wurde dann durch elektrolytische Reduktion von $UO_2^{2+}$ nach $U^{4+}$ reduziert. Die Reduktion lief unter Verwendung eines Platinnetzes als Anode und von Quecksilber als Kathode und bei einer Spannung von 4,5 V ab. Das 4-wertige Uran wurde anschliessend durch Zugabe von weiteren 4 g Cetylpyridiniumchlorid (gelöst in 10 ml 0,3 N $HNO_3$ bei 60 °C) ausgefällt und die Suspension wiederum 30 min. lang gerührt. Nach der Filtration des uranhaltigen Präzipitats wurde das Filtrat abgedampft und der Rückstand sowie die beiden metallhaltigen Präzipitate analysiert. Das Plutoniumpräzipitat enthielt 97,8% der ursprünglichen Plutoniumaktivität und nur Spurenmengen von Uran; das Uranpräzipitat enthielt 94,3% des ursprünglichen Urangehalts und weniger als 1% der ursprünglichen Plutoniumaktivität.

**Patentansprüche**

1. Verfahren zur selektiven Trennung von Plutonium und Uran, dadurch gekennzeichnet, dass man zu einer $Pu^{4+}$ und $UO_2^{2+}$ enthaltenden Lösung Salpetersäure in einer solchen Menge zugibt, dass das $Pu^{4+}$ anionische Nitratokomplexe bildet, ein kationisches Tensid zusammen mit der Salpetersäure oder vor oder nach der Zugabe der Salpetersäure zugibt, den dadurch entstehenden Niederschlag aus seiner Mutterlauge in an sich bekannter Weise abtrennt und das Plutonium aus dem Niederschlag gewinnt.

2. Verfahren nach Anspruch 1, dadurch gekennzeichnet, dass das in der Mutterlauge verbleibende $UO_2^{2+}$ nach Abtrennen des Pu-enthaltenden Niederschlages zu $U^{4+}$ reduziert wird, wobei $U^{4+}$ in anionische Nitratokomplexe überführt wird, und in Gegenwart eines kationischen Tensids gefällt und der entstehende Niederschlag in an sich bekannter Weise abgetrennt und das Uran aus dem Niederschlag gewonnen wird.

3. Verfahren zur selektiven Trennung von Plutonium und Uran, dadurch gekennzeichnet, dass man zu einer $Pu^{4+}$ und $U^{4+}$ enthaltenden Lösung Salpetersäure in einer solchen Menge zugibt, dass $Pu^{4+}$ und $U^{4+}$ anionische Nitratokomplexe bilden, ein kationisches Tensid zusammen mit der Salpetersäure oder vor oder nach der Zugabe der Salpetersäure zugibt und so $Pu^{4+}$ und $U^{4+}$ gemeinsam ausfällt, den Niederschlag einer für $U^{4+}$ selektiven Oxidation unterwirft, so dass $U^{4+}$ in $UO_2^{2+}$ überführt wird und in Lösung geht.

4. Verfahren nach Anspruch 1, dadurch gekennzeichnet, dass in einer $Pu^{4+}$ und $UO_2^{2+}$ enthaltenden salpetersauren Lösung $Pu^{4+}$ zu $Pu^{3+}$ und $UO_2^{2+}$ zu $U^{4+}$ reduziert werden, $U^{4+}$ mit einem kationischen Tensid gefällt und der Niederschlag abgetrennt wird, wonach $Pu^{3+}$ wieder zu $Pu^{4+}$ oxidiert und dann ebenfalls gefällt wird.

5. Verfahren nach einem der Ansprüche 1, 2 oder 4, dadurch gekennzeichnet, dass die $Pu^{4+}$ und $UO_2^{2+}$ enthaltende Lösung eine 1,0 N bis 10,0 N wässrige Salpetersäurelösung ist.

6. Verfahren nach einem der vorhergehenden Ansprüche, dadurch gekennzeichnet, dass man als Tensid langkettige Alkylpyridiniumsalze, Alkylamine oder deren Salze, Alkyldimethylnaphtylammoniumsalze, alkylierte Arylamine oder deren Salze, alkyliertes Morpholin oder dessen Salze, oxalkyliertes Pyridin oder dessen Salze, alkyliertes Chinolin oder dessen Salze oder Gemische dieser Verbindungen verwendet, wobei es sich bei den langkettigen Alkylresten um gerade oder verzweigte Ketten von 4 bis 24 Kohlenstoffatomen handelt.

7. Verfahren nach Anspruch 6, dadurch gekennzeichnet, dass man als Tensid ein N-Cetylpyridiniumsalz oder ein N-Octadecylpyridiniumsalz verwendet.

8. Verfahren nach einem der voranstehenden Ansprüche, dadurch gekennzeichnet, dass man das Tensid in der 1- bis 10-fachen äquivalenten Menge, bevorzugt jedoch in der 1,01- bis 1,10-fachen äquivalenten Menge, bezogen auf Uran bzw. Plutonium, verwendet.

9. Verfahren nach einem der voranstehenden Ansprüche, dadurch gekennzeichnet, dass die Abtrennung der plutoniumhaltigen Niederschläge durch ein Flotationsverfahren erfolgt, dass dabei mehrere Flotationszellen verwendet werden, die in Reihe und/oder parallel geschaltet sind, dass man zum Aufschäumen ein Inertgas (wie Stickstoff) oder Luft verwendet, dass man den abflotierten niederschlaghaltigen Schaum weitgehend entwässert, den Niederschlag in wenig Wasser suspendiert, die Suspension erwärmt, so dass der Niederschlag in Lösung geht, sodann aus der Lösung das $Pu^{4+}$ durch Erhöhung des pH-Wertes als Plutonat ausfällt, den Niederschlag abtrennt und das tensidhaltige Filtrat in den Flotationsprozess rezirkuliert.

10. Verfahren nach einem der vorhergehenden Ansprüche, dadurch gekennzeichnet, dass die aufzubereitenden Lösungen neben Uran und Plutonium andere Metallionen enthalten, die in diesen Lösungen entweder keine anionischen Komplexe oder aber schwächere anionische Komplexe bilden als $Pu^{4+}$ und die keine schwerlöslichen Niederschläge mit kationischen Tensiden bilden.

11. Verfahren nach einem der vorhergehenden Ansprüche, dadurch gekennzeichnet, dass das Verfahren kontinuierlich durchgeführt wird.

**Claims**

1. Process for selectively separating plutonium and uranium wherein such an amount of nitric acid is added to a solution containing $Pu^{4+}$ and $UO_2^{2+}$ that $Pu^{4+}$ forms anionic nitrato complexes or a cationic tenside together with the nitric acid is added prior to or after addition of the nitric acid, the precipitate so formed is separated from its mother liquor in a familiar way and the plutonium is recovered from the precipitate.

2. Process according to claim 1 wherein the $UO_2^{2+}$ remaining in the mother liquor is reduced to $U^{4+}$ after separation of the Pu containing precipitate while transferring $U^{4+}$ into anionic nitrato complexes, and it is precipitated in the presence of a cationic tenside and the precipitate formed separated in a familiar way and the uranium recovered from the precipitate.

3. Process for selectively separating plutonium and uranium wherein nitric acid is added to a $Pu^{4+}$ and $U^{4+}$ containing solution in such an amount that $Pu^{4+}$ and $U^{4+}$ form anionic nitrato complexes, a cationic tenside together with a nitric acid is added prior to or after addition of the nitric acid, thus coprecipitating $Pu^{4+}$ and $U^{4+}$, the precipitate is subjectet to a selective oxidation for $U^{4+}$ so that $U^{4+}$ is transferred into $UO_2^{2+}$ and dissolved.

4. Process according to claim 1 wherein $Pu^{4+}$ in a $Pu^{4+}$ and $UO_2^{2+}$ containing nitric solution is reduced to $Pu^{3+}$ and $UO_2^{2+}$ to $U^{4+}$, $U^{4+}$ is precipitated with a cationic tenside and the precipitate separated, whereupon $Pu^{3+}$ is reoxidized into $Pu^{4+}$ and then likewise precipitated.

5. Process according to one of the foregoing claims 1, 2 or 4 wherein the $Pu^{4+}$ and $UO_2^{2+}$ containing solution is an 1.0 N to 10.0 N aqueous nitric acid solution.

6. Process according to one of the foregoing claims wherein long-chain alkyl pyridinium salts, alkylamines or their salts, alkyldimethylnaphthylammonium salts, alkylated arylamines or their salts, alkylated morpholines or their salts, oxalkylated pyridine or its salts, alkylated quinoline or its salts or mixtures of these compounds are used as tenside, the long-chain alkyl rests being straight or branched chains of 4 to 24 carbon atoms.

7. Process according to claim 6 wherein an N-cetylpyridinium salt or an N-octadeylpyridinium salt is used as tenside.

8. Process according to one of the foregoing claims wherein the tenside is used in one to ten times the equivalent amount, but preferably in 1.01 to 1.10 times the equivalent amount, related to uranium and plutonium, respectively.

9. Process according to one of the foregoing claims wherein separation of the plutonium bearing precipitates is done by a flotation technique, several flotation cells are used which are connected in series and/or in parallel, for foaming up an inert gas (e.g. nitrogen) or air is used, the floted precipitate bearing foam is largely dehydrated, the precipitate suspended in little water, the suspension warmed up so that the precipitate is dissolved whereupon $Pu^{4+}$ is precipitated as plutonate from the solution through increase in the pH, the precipitate is separated and the tenside containing filtrate recirculated into the flotation process.

10. Process according to one of the foregoing claims wherein the solutions to be processed, in addition to uranium and plutonium, contain still other metal ions which in these solutions either form no anionic complexes or weaker anionic complexes compared with $Pu^{4+}$ and which do not form difficult to dissolve precipitates with cationic tensides.

11. Process according to one of the foregoing claims wherein the process is performed in a continuous mode.

## Revendications

1. Procédé pour la séparation sélective de Plutonium et d'Uranium, caractérisé en ce que l'on ajoute, à une solution contenant $Pu^{4+}$ et $UO_2^{2+}$ de l'acide nitrique dans une proportion telle qu'il se forme avec $Pu^{4+}$ un complexe nitrato anionique, ajoute un agent tensio-actif cationique, en commun avec l'acide nitrique, ou avant, ou après l'addition d'acide nitrique, sépare le précipité qui s'est formé de sa liqueur-mère, et récupère le plutonium à partir de ce précipité.

2. Procédé suivant la revendication 1, caractérisé en ce que l'on réduit le $UO_2^{2+}$ restant dans la liqueur-mère après séparation du précipité contenant le $Pu^{4+}$, en $U^{4+}$, $U^{4+}$ étant alors transformé en un complexe nitrato anionique, et fait précipiter en présence d'un tensio-actif cationique et sépare le précipité qui s'est formé d'une façon connue, et récupère l'Uranium à partir de ce précipité.

3. Procédé pour la séparation sélective du Plutonium et de l'Uranium, caractérisé en ce que l'on ajoute à une solution contenant $Pu^{4+}$ et $U^{4+}$, de l'acide nitrique dans une proportion telle que $Pu^{4+}$ et $U^{4+}$ forment des complexes nitrato anioniques, ajoute un agent tensio-actif cationique, en commun avec l'acide nitrique, ou avant, ou après cette addition, et de cette façon, fait précipiter ensemble $Pu^{4+}$ et $U^{4+}$, soumet le précipité à une oxyda-

tion sélective de $U^{4+}$, qui se transforme ainsi en $UO_2^{2+}$ et passe en solution.

4. Procédé suivant la revendication 1, caractérisé en ce que dans une solution d'acide nitrique contenant $Pu^{4+}$ et $UO_2^{2+}$, on réduit $Pu^{4+}$ en $Pu^{3+}$, et $UO_2^{2+}$ en $U^{4+}$, fait précipiter $U^{4+}$ avec un tensio-actif cationique et sépare le précipité, après quoi $Pu^{3+}$ est oxydé à nouveau en $Pu^{4+}$ puis est également ment précipité.

5. Procédé suivant l'une des revendications 1, 2 ou 4, caractérisé en ce que la solution contenant $Pu^{4+}$ et $UO_2^{2+}$ est une solution d'acide nitrique aqueux 1 N à 10 N.

6. Procédé suivant l'une des revendications 1, 2 ou 4, caractérisé en ce que l'on utilise comme agents tensio-actifs des sels d'alcoylpyridinium à longue chaine, des alcoylamine ou leurs sels, des sels d'alcoylméthylnaphthylammonium, des arylamines alcoylées ou leurs sels, de la morpholine alcoylée ou ses sels, de la pyridine oxalcoylée ou ses sels de la quinoléine ou ses sels, ou des mélanges de ces composés, où il s'agit, dans les restes alcoyl à longue chaine, de chaines droites ou ramifiées à 4 à 24 atomes de carbone.

7. Procédé suivant la revendication 6, caractérisé en ce que l'on utilise, comme tensio-actif, un sel de N-cétylpyridinium, ou un sel de N-octadécylpyridinium.

8. Procédé suivant l'une des revendications précédentes, caractérisé en ce que l'on utilise le tensio-actif dans la proportion de 1 à 10 équivalents, de préférence toutefois dans la proportion de 1,01 à 1,10 équivalent rapporté à l'Uranium ou au Plutonium.

9. Procédé suivant l'une des revendications précédentes, caractérisé en ce que la séparation des précipités contenant du Plutonium s'opère par flottation, que l'on utilise à cet effet plusieurs cellules de flottation qui sont montées en séries, ou en parallèle, que l'on utilise, pour faire mousser, un gaz inerte (tel que l'azote) ou l'air que l'on déshydrate, dans une large mesure, la mousse prélevée au cours de la flottation et contenant le précipité, met le précipité en suspension dans une petite quantité d'eau, chauffe cette suspension de façon que le précipité se mette en solution, fait précipiter ensuite le $Pu^{4+}$ à partir de la solution, en augmentant la valeur du pH, sous la forme de plutonate, sépare le précipité, et remet en circulation le filtrat contenant le tensio-actif dans l'opération de flottation.

10. Procédé suivant l'une des revendications précédentes, caractérisé en ce que les solutions que l'on doit préparer contiennent en plus de l'Uranium et du Plutonium, d'autres ions métalliques qui, dans ces solutions, ou bien ne forment pas de complexes anioniques, ou bien forment des complexes anioniques plus faibles que $Pu^{4+}$, et qui ne forment, avec les tensio-actifs cationiques, aucun précipité peu solubles à l'eau.

11. Procédé suivant l'une des revendications précédentes, caractérisé en ce que l'opération du procédé s'effectue en continu.